# EUROPÄISCHE PATENTSCHRIFT

(11) **EP 2 621 020 B1**
(45) Veröffentlichungstag und Bekanntmachung des Hinweises auf die Patenterteilung: **30.12.2015**
(21) Anmeldenummer: 13000042.5
(22) Anmeldetag: 04.01.2013
(51) Int. Cl.: H01R 9/24, H01R 13/40

(54) **Elektrische Leitungsanordnung und Reibbelagsverschleißsensor**
Electric cable assembly and friction lining wear sensor
Dispositif de conduite électrique et capteur d'usure de garniture de friction

(30) Priorität: 27.01.2012 DE 102012001514
(43) Veröffentlichungstag der Anmeldung: 31.07.2013
(73) Patentinhaber: BOWA-electronic GmbH & Co. KG, 72810 Gomaringen (DE)
(72) Erfinder: Böttle, Bernd, 72138 Kirchentellinsfurt (DE)
(74) Vertreter: Schneider, Peter Christian

(56) Entgegenhaltungen:
- EP-A1- 1 094 569
- DE-A1- 3 034 632
- DE-A1- 4 120 527
- DE-A1- 19 810 562
- US-A- 3 771 112
- US-A1- 2002 039 858

## Beschreibung

### Gebiet der Erfindung

Die Erfindung bezieht sich auf eine elektrische Leitungsanordnung, umfassend
- ein erstes Kabel mit wenigstens zwei ersten Adern, die jeweils eine elektrisch leitende Seele und eine elektrisch nicht-leitende Isolierung aufweisen, und
- ein zweites Kabel mit wenigstens zwei zweiten Adern, die jeweils eine elektrisch leitende Seele und eine elektrisch nicht-leitende Isolierung aufweisen und die jeweils mit einer der ersten Adern zu einem verbundenen Aderpaar elektrisch leitend verbunden sind,
wobei ein Führungselement die Kabel dem Bereich der Verbindungsstellen der Aderpaare parallel oder in einem Winkel von nicht mehr als 45° zueinander zuführt und die Verbindungsstellen, in denen die Seelen parallel und gleichgerichtet angeordnet sind, auf einem plattenförmigen Träger aus einem elektrisch isolierenden Material, der in einem Gehäuse fixiert ist, angeordnet sind.

Die Erfindung bezieht sich weiter auf eine Reibbelagsverschleißsensor-Anordnung für ein Kraftfahrzeug, umfassend einen Sensorkörper, der von einer Leiterschleife umschlungen ist, welche mittels einer solchen elektrischen Leitungsanordnung mit einem Steuergerät verbunden ist.

### Stand der Technik

Reibbelagsverschleißsensoren für Kraftfahrzeuge sind beispielsweise aus der DE 20 2008 013 226 U1 und der DE 41 20 527 A1 bekannt. Sie umfassen eine Leiterschleife, die um einen Sensorkörper geschlungen ist, welcher z.B. in der Trägerplatte eines Kraftfahrzeug-Bremsbelags fixiert ist und in eine Ausnehmung des Bremsbelags hineinragt. Bei hinreichendem Abrieb des Bremsbelags wird die Leiterschleife von dem rotierenden Teil der Bremse, z.B. der Bremsscheibe, kontaktiert und bei weiterem Abrieb durchtrennt. Dieses Ereignis kann elektrisch detektiert werden, beispielsweise durch Detektion einer Stromunterbrechung durch die Leiterschleife oder durch Messung eines Stromflusses gegen die von der Bremsscheibe repräsentierte Masse. Die Einzelheiten der Detektion, die in einem elektronischen Steuergerät des Kraftfahrzeugs ausgewertet wird, sind für die vorliegende Erfindung nicht von Belang.

Bei der Verdrahtung des Sensors mit dem Steuergerät sind besondere Anforderungen zu erfüllen. So ist eine hohe Temperaturbeständigkeit für die elektrischen Leitungen in der unmittelbaren Umgebung des Reibbelags erforderlich. Dies betrifft nicht nur die Leiterschleife um den Sensorkörper, sondern auch die zum Steuergerät führenden Ableitungen - wenigstens in ihren sensornahen Abschnitten. Andererseits sind die hierfür typischerweise verwendeten Hochtemperaturlitzen teuer in der Beschaffung und aufgrund ihrer häufig verwendeten Glasummantelung schwierig in der Verlegung. Überhaupt stellt die Leitungsverlegung vor dem Hintergrund der Bauraumknappheit in Kraftfahrzeugen ein nicht unerhebliches Problem dar und führt insbesondere bei der oben geschilderten Anwendung zu dem Erfordernis einer Leitungsumlenkung um bis zu 180°. Das bedeutet, dass die Leitung abschnittsweise parallel oder in einem Winkel von nicht mehr als 45° zu sich selbst verläuft, was eine enge Bogenführung erfordert, für die Hochtemperaturlitzen, wie oben erläutert, schlecht geeignet sind. Zur Lösung der vorgenannten Probleme ist es bekannt, einen Leitungsabschnitt mit Hochtemperaturlitzen zu gestalten, die außerhalb des Hochtemperaturbereichs in der Umgebung des Reibbelags mit den Adern eines herkömmlichen Mantelkabels verlängert werden. Das Mantelkabel wird, vom Sensor aus gesehen, unmittelbar hinter der Verbindungsstelle der Aderpaare in einem 180°-Bogen umgelenkt. Zur Führung und Fixierung des Bogens ist ein H-förmiger Halteclip vorgesehen, der einerseits das Mantelkabel und andererseits die parallel zu diesem geführten Hochtemperaturlitzen tüllenartig umgreift, wobei die parallelen Tüllen mit einem Quersteg verbunden sind, der seinerseits Befestigungsstrukturen zur Fixierung dieses Führungselementes an Rahmen- oder Karosseriestrukturen des Kraftfahrzeugs aufweist. Nachteilig bei dieser Anordnung ist zum einen der freie Kabelbogen, der aufgrund seines Eigengewichts erheblichen Vibrationsbewegungen ausgesetzt ist und daher eine besonders stabile und damit kostenträchtige Auslegung des Mantelkabels erfordert. Zum anderen ist der Abstand der parallel geführten Kabel nach unten beschränkt, da bei der Bogenführung des Mantelkabels ein minimaler Biegeradius im Bogenbereich nicht unterschritten werden darf, um das Mantelkabel langfristig nicht zu beschädigen.

Eine Vorrichtung, die die Adern eines ersten und eines zweiten Kabels ohne biegungsbedingte Beschädigung der Kabel elektrisch leitend miteinander verbinden kann, ist beispielsweise aus der DE 198 10 562 A1 bekannt. Außerdem ist es bekannt, die Verbindungsstellen vor dem Einfluss schädlicher Vibrationen und Verschmutzungen durch Umhüllung mit einer geeigneten Vergussmasse zu schützen. Entsprechende Vorrichtungen sind in der US 3,771,112 A und der US 2002/039858 A1 beschrieben. Klassischerweise wird der Schutz der Verbindungsstellen, wie in der DE 30 34 632 A1 oder der EP 1 094 569 A1 beschrieben, jedoch durch ein Gehäuse realisiert.

Die in der EP 1 094 569 A1 beschriebene elektrische Leitungsanordnung zeichnet sich dadurch aus, dass die Verbindungsstellen den aus einem elektrisch isolierenden Material bestehenden plattenförmigen Träger durchdringen. Auf diese Weise können auf unterschiedlichen Seiten des Trägers angeordnete Adern eines Aderpaares elektrisch leitend miteinander verbunden werden. Hierzu muss eine der Adern die Verbindungsstelle an einem räumlich tiefer gelegenen Punkt des Trägers kontaktieren. Dies ist insbesondere in Bezug auf den dadurch benötigten Bauraumbedarf der Leitungsanordnung äußerst ungünstig. Außerdem müssen die Kabel mit Kabelklemmen stabilisiert werden, die ebenfalls einen Teil des Raumes innerhalb des zum Schutz der Leitungsanordnung vorgesehenen Gehäuses beanspruchen, was zu einer weiteren Verschärfung der Bauraumproblematik führt.

### Aufgabenstellung

Es ist die Aufgabe der vorliegenden Erfindung, eine gattungsgemäße Leitungsanordnung derart weiterzubilden, dass bei minimierten Bauraumbedarf eine stabile Kabelführung gewährleistet wird.

### Darlegung der Erfindung

Diese Aufgabe wird in Verbindung mit den Merkmalen des Oberbegriffs von Anspruch 1 dadurch gelöst, dass die Verbindungsstellen auf beiden Seiten des plattenförmigen Trägers einander elektrisch nicht kontaktierend angeordnet sind, wobei die Enden der Adern je eines Kabels den plattenförmigen Träger maulartig umgreifen und einander direkt gegenüberliegend angeordnet sind, und das Gehäuse für jedes Kabel eine hohle Führungstülle aufweist.

Bevorzugte Ausführungsformen der Erfindung sowie eine Reibbelagsverschleißsensor-Anordnung, bei der die vorliegende Erfindung Einsatz findet, sind Gegenstand der abhängigen Ansprüche.

Die erfindungsgemäßen Führungstüllen ermöglichen eine stabile Führung der Kabel. Insbesondere das Auftreten schädlicher Drehmomente auf empfindliche Umlenkungsbereiche der Kabel wird auf diese Weise vermieden. Der Fachmann kann zudem die spezielle Winkelorientierung der Tüllen zueinander an die speziellen Anforderungen des Einzelfalls anpassen. Die erfindungsgemäße Anordnung der Verbindungsstellen und der Aderenden ermöglicht im Vergleich zum aus der EP1094569A1 bekannten Stand der Technik eine Minimierung des Bauraumbedarfs. Eine im Stand der Technik beschriebene elektrisch leitende Verbindung in vertikaler Richtung, d.h. durch den plattenförmigen Träger hindurch, erfordert stets, dass die entsprechend zu verbindenden Adern die Verbindungstelle an einander nicht gegenüberliegenden Seiten kontaktieren. Die Minimaldimensionierung des plattenförmigen Trägers und der Verbindungsstelle wird infolgedessen durch diesen, zwingend zwischen den Kontaktstellen erforderlichen Abstand, begrenzt. Die erfindungsgemäße Anordnung weist im Gegensatz zum Stand der Technik keine derartige Begrenzung für die Bauraumbedarfsminimierung auf.

Bevorzugt werden die Verbindungsstellen als Crimpverbindungen ausgestaltet. Diese Art der Verbindung, die rein mechanisch vollziehbar ist, ist herstellungstechnisch besonders günstig, insbesondere kostengünstig. Sie ist dank der Anordnung der Trägerplatte in einem geschützten Gehäuse auch hinreichend, insbesondere dann, wenn die Trägerplatte in dem Gehäuse fixiert und somit gegen Vibrationen geschützt ist. Selbstverständlich ist es auch möglich, die elektrischen Verbindungen als Löt- oder Schweißverbindungen oder auf andere bekannte Weise vorzunehmen.

Bei einer besonders bevorzugten Ausführungsform der Erfindung ist das Gehäuse um den Träger sowie um die trägerseitigen Endabschnitte der Kabel herum gespritzt. So kann beispielsweise eine vorkonfektionierte Anordnung aus Trägerplatte und Kabeln, deren trägerseitige Endabschnitte an den Verbindungsstellen auf der Trägerplatte fixiert sind, in die Form einer Kunststoffspritzgussmaschine eingelegt werden. Nachfolgendes Auffüllen der Form mit verflüssigtem thermoplastischem Kunststoff führt zur Ausbildung des Gehäuses, in welchem die Verbindungsstellen gegen Umwelteinflüsse und Vibrationsbewegungen geschützt eingebettet sind.

Alternativ ist es auch möglich, das Gehäuse aus wenigstens zwei Teilschalen auszubilden und um den Träger sowie die trägerseitigen Endabschnitte der Kabel herum zusammenzusetzen. Das Zusammensetzen kann beispielsweise durch Clipsen, Schrauben oder Kleben erfolgen. Diese Variante, die aufgrund des zusätzlichen Arbeitsschrittes teurer in der Realisierung ist, hat den Vorteil, dass das Gehäuse bei Bedarf geöffnet werden kann, um z.B. die Verbindungsstellen zu überprüfen oder zu reparieren. Bei typischen Reibbelagsverschleißsensoren, die zusammen mit ihrer Leitungsanordnung in der Regel als Einwegteile produziert werden, ist diese Variante aus Kostengründen jedoch meist uninteressant. Bei anderen Anwendungen kann sie sich jedoch durchaus als vorteilhaft erweisen.

Bei einer Weiterbildung der Erfindung ist vorgesehen, dass das Gehäuse äußere Haltestrukturen zu seiner Festlegung an einer externen Basis aufweist. Diese sind durch die Formgebung beim Spritzen des Gehäuses bzw. seiner Teilschalen leicht zu realisieren und an die jeweiligen Gegebenheiten des Einzelfalls anpassbar.

Wie oben bereits erläutert, ist es vorteilhaft, wenn bei der bevorzugten Anwendung der Erfindung als Leitungsanordnung einer Reibbelagsverschleißsensor-Anordnung eines Kraftfahrzeugs die zweiten Adern aufgrund der Wärmeerzeugung beim Reibvorgang als Hochtemperaturlitzen ausgebildet sind. Bei anderen Anwendungen können die Eigenschaften der ersten und zweiten Adern selbstverständlich an die jeweiligen Gegebenheiten angepasst werden, ohne dass dies das Wesen der vorliegenden Erfindung verändern würde.

Eine Reibbelagsverschleißsensor-Anordnung, deren Leiterschleife die zweiten Adern einer erfindungsgemäßen Leitungsanordnung kontaktiert, ist eigenständiger Gegenstand der vorliegenden Erfindung.
Der Begriff des Kontaktierens ist hierbei weit zu verstehen und umfasst insbesondere auch die einstückige Ausgestaltung von zweiten Adern und Leiterschleife.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung einer nichterfindungsgemäßen Leitungsanordnung mit transparent dargestelltem Gehäuse;
- Figur 2:: eine Außenansicht einer bevorzugten Ausführungsform der erfindungsgemäßen Leitungsanordnung.

### Beschreibung bevorzugter Ausführungsformen

Gleiche Bezugszeichen in den Figuren deuten auf gleiche oder analoge Bauteile hin. Die nachfolgende Beschreibung bezieht sich, sofern kein ausschließlicher Bezug auf eine spezielle Figur gegeben ist, auf sämtliche Figuren.

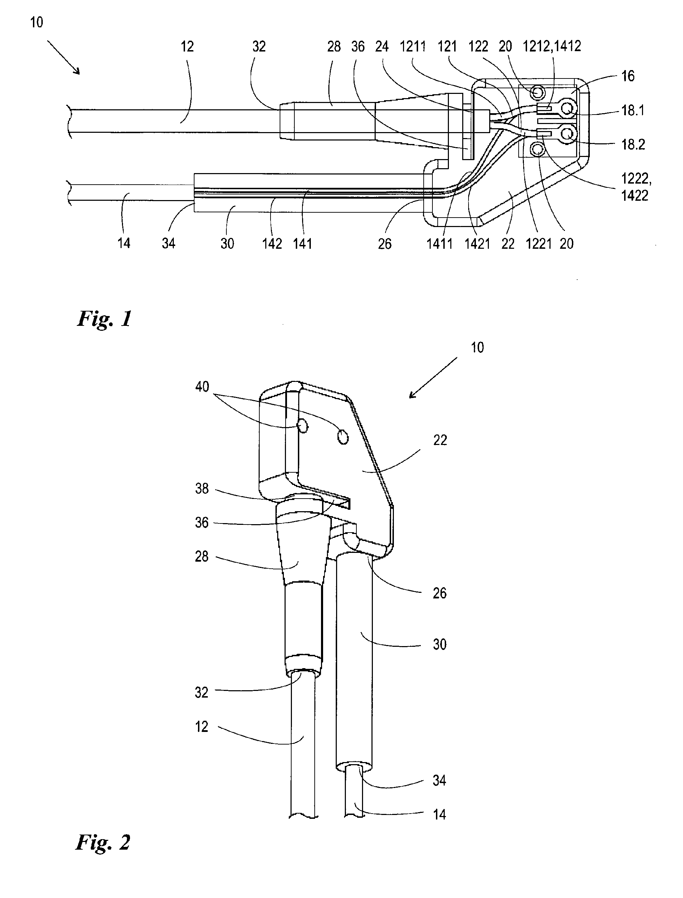

Figur 1 zeigt eine Darstellung einer nicht-erfindungsgemäßen Leitungsanordnung 10 in deren Umlenkungsbereich. In Figur 1 oben ist ein herkömmliches Mantelkabel 12 mit zwei Adern 121 und 122 dargestellt. Die Adern 121, 122 weisen in üblicher Weise eine Isolierung 1211, 1221 sowie jeweils eine elektrisch leitende Seele 1212, 1222 auf.

Parallel zu dem Mantelkabel 12 ist in Figur 1 unten ein Hochtemperaturkabel 14 dargestellt, dessen einzelne Adern 141, 142 als Hochtemperaturlitzen ausgebildet sind, die jeweils eine äußere, temperaturbeständige Isolierung 1411, 1421 und eine elektrisch leitende, in Figur 1 von den Seelen 1212, 1222 des Mantelkabels 12 verdeckte Seele 1412, 1422 aufweisen.

Auf einem plattenförmigen Träger 16, der hier auch als Trägerplatte 16 angesprochen wird, sind zwei Crimpstellen 18.1, 18.2 angeordnet. Bei diesen Crimpstellen handelt es sich im Ausgangszustand um auf der Trägerplatte 16 fixierte Blechelemente mit seitlich hochstehenden Blechzähnen. Im Rahmen eines Crimp-Arbeitsschrittes werden die Seelen 1212, 1412 bzw. 1222, 1422 zwischen die hochstehenden Blechzähne der Crimpstellen 18.1 bzw. 18.2 eingelegt und die Zähne danach mechanisch um die Seelen 1212, 1412 bzw. 1222, 1422 zusammengequetscht, sodass eine feste mechanische sowie elektrische Verbindung geschaffen wird. Das Material der Trägerplatte 16 ist ein elektrisches Isolatormaterial, beispielweise ein Kunststoff, sodass nach dem Crimpprozess jeweils eine Ader 121, 122 des Mantelkabels 12 mechanisch und elektrisch mit jeweils einer Ader 141, 142 des Hochtemperaurkabels 14 verbunden ist.

Eine derart vorkonfektionierte Anordnung wird in eine Spritzgussform einer Kunststoffspritzgussmaschine, die in den Figuren nicht dargestellt ist, eingelegt. Dabei dienen die Löcher 20 in der Trägerplatte 16 zur Fixierung der Trägerplatte 16 in der Form, die zu den Löchern 20 korrespondierende Dorne aufweisen kann.

Im Rahmen eines anschließenden Spritzgussprozesses wird die Form mit flüssigem Kunststoff aufgefüllt, sodass sich nach Aushärten des Kunststoffs das Gehäuse 22 ausbildet, in welches die Trägerplatte 16 und die trägerplattenseitigen Enden der Kabel 12, 14 sowie die Verbindungsstellen 18.1, 18.2 eingebettet sind. Eine durch Vibrationen hervorgerufene Relativbewegung der Adern 121, 122 des Mantelkabels 12 zu den mit ihnen verbundenen Adern 141, 142 des Hochtemperaturkabels 14 ist auf diese Weise ausgeschlossen.

Ausgehend von den Crimpstellen 18.1, 18.2 verlaufen die Adern 121, 122 und 141, 142 ohne scharfe Bögen und nur entlang sanfter Richtungsablenkungen zu Durchbrüchen 24, 26 des Gehäuses 22, an welche sich einstückig mit dem Gehäuse 22 verbundene und im selben Spritzprozess erzeugte Führungstüllen 28, 30 anschließen, in welchen die Kabel 12, 14 parallel zueinander geführt sind. An den Austrittsöffnungen 32, 34 der Tüllen 28, 30 verlassen die Kabel 12, 14 das vom Gehäuse 22 und den Tüllen 28, 30 gebildete Führungselement. Hier sind sie jedoch bereits stabil ausgerichtet und orientiert, sodass Vibrationen nur noch geringstmöglichen Einfluss haben und insbesondere keine schädlichen Drehmomente auf empfindliche Umlenkungsbereiche der Kabel 12, 14 ausüben können. Bei der dargestellten Leitungsanordnung befindet sich in der Nähe des Gehäuseausgangs 24 eine Schlitzstruktur 36, die eine das Mantelkabel 12 führende Säule 38 umgreift. Eine in den Figuren nicht dargestellte Federklammer, die an einer festen Basis fixiert ist, kann zur Befestigung der Leitungsanordnung 10 in die Schlitzstruktur 36 eingreifen und durch Hintergreifen der Säule 38 eine Verrastung hervorrufen.

Bei der in Figur 2 gezeigten bevorzugten Ausführungsform sind zwei Durchführungen 40 durch das Gehäuse 22 vorgesehen. Diese Durchführungen 40, die keinen Zugang zu elektrisch leitfähigen Elementen innerhalb des Gehäuses 22 darstellen, können alternativ oder zusätzlich zu der oben erläuterten Verrastung zur Fixierung der erfindungsgemäßen Leitungsanordnung 10 an einer festen Basis mittels Schrauben, Bolzen oder Ähnliches genutzt werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere kann die spezielle Formgebung des Gehäuses 22 und der Tüllen 28, 30 den speziellen Anforderungen des Einzelfalls angepasst werden. Dies umfasst ausdrücklich auch die spezielle Winkelorientierung der Tüllen 28, 30 zueinander. Alternativ zur vorliegenden Erfindung ist es bei Verwendung eines Mantelkabels mit hoch flexiblen Hochtemperaturlitzen auch möglich, lediglich ein einziges Kabel zu verwenden, dessen im Bereich der Umlenkung von ihrer Mantelisolierung befreite Litzen in einem engen Bogen verlegt sind, wobei das sie umgebende Gehäuse die notwendige Schutz-, Stabilisierungs - und Isolationsfunktion erfüllt.

### Bezugszeichenliste

- 10: Leitungsanordnung
- 12: Mantelkabel
- 121: Ader von 12
- 1211: Isolierung von 121
- 1212: Seele von 121
- 122: Ader von 12
- 1221: Isolierung von 122
- 1222: Seele von 122
- 14: Hochtemperaturkabel
- 141: Hochtemperaturlitze/Ader von 14
- 1411: Isolierung von 141
- 1412: Seele von 141
- 142: Hochtemperaturlitze/Ader von 14
- 1421: Isolierung von 142
- 1422: Seele von 142
- 16: Trägerplatte
- 18.1: Crimpverbindung
- 18.2: Crimpverbindung
- 20: Fixierungsloch in 16
- 22: Gehäuse
- 24: Gehäuseöffnung
- 26: Gehäuseöffnung
- 28: Führungstülle
- 30: Führungstülle
- 32: Ausgangsöffnung von 28
- 34: Ausgangsöffnung von 30
- 36: Schlitzstruktur
- 38: Säule
- 40: Durchführung durch 22

## Patentansprüche

1. Elektrische Leitungsanordnung, umfassend
- ein erstes Kabel (12) mit wenigstens zwei ersten Adern (121, 122), die jeweils eine elektrisch leitende Seele (1212, 1222) und eine elektrisch nicht-leitende Isolierung (1211, 1221) aufweisen, und
- ein zweites Kabel (14) mit wenigstens zwei zweiten Adern (141, 142), die jeweils eine elektrisch leitende Seele (1412, 1422) und eine elektrisch nicht-leitende Isolierung (1411; 1421) aufweisen und die jeweils mit einer der ersten Adern (121, 122) zu einem verbundenen Aderpaar (121, 141; 122, 142) elektrisch leitend verbunden sind,
wobei ein Führungselement die Kabel (12, 14) dem Bereich der Verbindungsstellen (18.1, 18.2) der Aderpaare (121, 141; 122, 142) parallel oder in einem Winkel von nicht mehr als 45° zueinander zuführt und die
Verbindungsstellen (18.1, 18.2), in denen die Seelen (1212, 1412; 1222, 1422) parallel und gleichgerichtet angeordnet sind, auf einem plattenförmigen Träger (16) aus einem elektrisch isolierenden Material, der in einem Gehäuse (22) fixiert ist, angeordnet sind,
**dadurch gekennzeichnet,**
**dass** die Verbindungsstellen (18.1, 18.2) auf beiden Seiten des plattenförmigen Trägers (16) einander elektrisch nicht kontaktierend angeordnet sind, wobei die Enden der Adern je eines Kabels (12; 14) den plattenförmigen Träger maulartig umgreifen und einander direkt gegenüberliegend angeordnet sind, und das Gehäuse (22) für jedes Kabel (12; 14) eine hohle Führungstülle (28; 30) aufweist.

2. Elektrische Leitungsanordnung nach Anspruch 1,
**dadurch gekennzeichnet,**
**dass** die Verbindungsstellen als Crimpverbindungen (18.1, 18.2) ausgestaltet sind.

3. Elektrische Leitungsanordnung nach Anspruch 1,
**dadurch gekennzeichnet,**
**dass** die Verbindungsstellen als Löt- oder Schweißverbindungen ausgestaltet sind.

4. Elektrische Leitungsanordnung nach einem der vorangehenden Ansprüche,
**dadurch gekennzeichnet,**
**dass** das Gehäuse (22) um den Träger (16) sowie um die trägerseitigen Endabschnitte der Kabel (12, 14) herum gespritzt ist.

5. Elektrische Leitungsanordnung nach einem der Ansprüche 1 bis 3,
**dadurch gekennzeichnet,**
**dass** das Gehäuse aus wenigstens zwei Teilschalen ausgebildet und um den Träger sowie um die trägerseitigen Endabschnitte der Kabel herum zusammengesetzt ist.

6. Elektrische Leitungsanordnung nach einem der vorangehenden Ansprüche,
**dadurch gekennzeichnet,**
**dass** das Gehäuse (22) äußere Haltestrukturen (36) zu seiner Festlegung an einer externen Basis aufweist.

7. Elektrische Leitungsanordnung nach einem der vorangehenden Ansprüche,
**dadurch gekennzeichnet,**
**dass** die zweiten Adern (141, 142) als Hochtemperaturlitzen ausgebildet sind.

8. Reibbelagsverschleißsensor-Anordnung für ein Kraftfahrzeug, umfassend einen Sensorkörper, der von
einer Leiterschleife umschlungen ist, welche mittels einer elektrischen Leitungsanordnung (10) mit einem Steuergerät verbunden ist,
**dadurch gekennzeichnet,**
**dass** die Leitungsanordnung (10) als eine Leitungsanordnung nach einem der vorangehenden Ansprüche ausgebildet ist, wobei die zweiten Adern (141, 142) der Leitungsanordnung (10) die den Sensorkörper umschlingende Leiterschleife kontaktieren.

## Claims

1. An electrical conductor assembly, comprising
- a first cable (12) with at least two first wires (121, 122) each of which have an electrically conductive core (1212, 1222) and an electrically non-conductive insulation (1211, 1221), and
- a second cable (14) with at least two second wires (141, 142) each of which have an electrically conductive core (1412, 1422) and an electrically non-conductive insulation (1411; 1421) and which are respectively connected electrically conductive with one of the first wires (121, 122) to a connected pair of wires (121, 141; 122, 142),
where a guide element feeds the cables (12, 14) into the area of the junction points (18.1, 18.2) of the pair of wires (121, 141; 122, 142) in parallel or at an angle of not more than 45° to one another, and the junction points (18.1, 18.2), in which the cores (1212, 1412; 1222, 1422) are arranged parallel and uni-directional on a plate-like support (16) made of an electrically insulating material, said support being fixed in a casing (22),
**characterized in that** the junction points (18.1, 18.2) are arranged on both sides of the plate-like support (16) so that they are reciprocally electrically non-contacting, where the ends of the wires of each cable (12; 14) encompass the plate-like support claw-like and are positioned directly opposite each other, and the casing (22) has a hollow guide grommet (28; 30) for each cable (12; 14).

2. The electrical conductor assembly according to Claim 1, **characterized in that** the junction points are designed as crimped connections (18.1,18.2).

3. The electrical conductor assembly according to Claim 1, **characterized in that** the junction points are designed as solder or weld joints.

4. The conductor assembly according to any of the preceding claims, **characterized in that** the casing (22) is injection-molded around the support (16) and around the end sections of the cables (12, 14) on the carrier side.

5. The electrical conductor assembly according to any of Claims 1 to 3, **characterized in that** the casing is formed from at least two partial shell sections and is assembled around the support and around the end sections of the cable on the carrier side.

6. The electrical conductor assembly according to any of the preceding claims, **characterized in that** the casing (22) has outer support structures (36) for fixing it onto an external base.

7. The electrical conductor assembly according to any of the preceding claims, **characterized in that** the second wires (141, 142) are designed as high-temperature strands.

8. A friction lining wear sensor arrangement for a motor vehicle, comprising a sensor body around which a conductor loop is wound, which is connected with a control unit by means of an electrical conductor assembly (10),
**characterized in that** the conductor assembly (10) is designed according to any of the preceding claims, where the second wires (141, 142) of the conductor assembly (10) contact the conductor loop wrapped around the sensor body.

## Revendications

1. Montage de câblage électrique, comprenant
- un premier câble (12) avec au moins deux premiers brins (121, 122), qui présentent respectivement une âme électriquement conductrice (1212, 1222) et une isolation électriquement non conductrice (1211, 1221), et
- un deuxième câble (14) avec au moins deux deuxièmes brins (141, 142), qui présentent respectivement une âme électriquement conductrice (1412, 1422) et une isolation électriquement non conductrice (1411; 1421) et qui sont respectivement reliés en conduction électrique à un des premiers brins (121, 122) pour former une paire de brins reliés (121, 141 ; 122, 142),
sachant qu'un élément de guidage apporte les câbles (12, 14) à la région des points de liaison (18.1,18.2) des paires de brins (121, 141; 122, 142) en parallèle ou sous un angle relatif inférieur ou égal à 45°, et que les points de liaison (18.1, 18.2), où les âmes (1212, 1412 ; 1222, 1422) sont disposées en étant parallèles et dirigées dans le même sens, sont disposés sur un support (16) en forme de plaque constitué d'un matériau électriquement isolant, qui est fixé dans un boîtier (22),
**caractérisé en ce que** les points de liaison (18.1, 18.2) sont disposés sans contact électrique mutuel sur les deux côtés du support (16) en forme de plaque, sachant que les extrémités des brins de chaque câble (12 ; 14) enserrent à la manière d'une mâchoire le support en forme de plaque et sont disposées en se faisant directement face, et que le boîtier (22) présente pour chaque câble (12 ; 14) une douille de guidage creuse (28, 30).

2. Montage de câblage électrique selon la revendication 1, **caractérisé en ce que** les points de liaison sont réalisés sous la forme de liaisons serties (18.1,18.2).

3. Montage de câblage électrique selon la revendication 1, **caractérisé en ce que** les points de liaison sont réalisés sous la forme de liaisons brasées ou soudées.

4. Montage de câblage électrique selon l'une des revendications précédentes, **caractérisé en ce que** le boîtier (22) est moulé par injection autour du support (16) ainsi qu'autour des parties terminales des câbles (12, 14) situées du côté du support.

5. Montage de câblage électrique selon l'une des revendications 1 à 3, **caractérisé en ce que** le boîtier est constitué d'au moins deux coques partielles et est assemblé autour du support ainsi qu'autour des parties terminales des câbles situées du côté du support.

6. Montage de câblage électrique selon l'une des revendications précédentes, **caractérisé en ce que** le boîtier (22) présente des structures de soutien extérieures (36) pour sa fixation sur une base externe.

7. Montage de câblage électrique selon l'une des revendications précédentes, **caractérisé en ce que** les deuxièmes brins (141, 142) sont réalisés sous la forme de fils toronnés résistant aux températures élevées.

8. Ensemble de capteur d'usure de garniture de friction pour un véhicule automobile, comprenant un corps de capteur autour duquel est enroulée une boucle conductrice qui est reliée à un appareil de commande au moyen d'un montage de câblage électrique (10),
**caractérisé en ce que** le montage de câblage (10) est réalisé selon l'une des revendications précédentes, sachant que les deuxièmes brins (141, 142) du montage de câblage (10) entrent en contact avec la boucle conductrice enroulée autour du corps de capteur.
